# FASCICULE DE BREVET EUROPEEN

(11) **EP 0 551 263 B1**
(45) Date de publication et mention de la délivrance du brevet: **07.12.1994**
(21) Numéro de dépôt: 91905836.2
(22) Date de dépôt: 11.03.1991
(51) Int. Cl.: F16H 21/18, B23Q 1/14

(54) **PROCEDE ET DISPOSITIF POUR ANIMER UNE SURFACE D'UN MOUVEMENT DE VA-ET-VIENT DANS UN PLAN**
VERFAHREN UND VORRICHTUNG UM EINE FLÄCHE BEI HIN- UND HERGEHENDER BEWEGUNG IN EINE EBENE ZU FÜHREN
PROCESS AND DEVICE FOR CAUSING A SURFACE TO RECIPROCATE IN A PLANE

(30) Priorité: 19.03.1990 FR 9003698
(43) Date de publication de la demande: 21.07.1993
(73) Titulaire: KODAK-PATHE, F-75594 Paris Cedex 12 (FR); EASTMAN KODAK COMPANY, Rochester, New York 14650-2201 (US)
(72) Inventeur: LONG, Michael, Kodak-Pathé, F-71102 Châlon-sur-Saône Cédex (FR); GAUDILLAT, Jacques, Fernand, Kodak-Pathé, F-71102 Châlon-sur-Saône Cédex (FR)
(74) Mandataire: Buff, Michel
(86) Numéro de dépôt international: FR9100192
(87) Numéro de publication internationale: WO9114886

(56) Documents cités:
- EP-A- 0 128 293
- WO-A-89/02039
- DE-B- 1 031 675
- GB-A- 684 933
- US-A- 3 835 338

## Description

L'invention concerne un procédé pour animer une surface mobile d'un mouvement de va-et-vient dans un plan. L'invention concerne également un dispositif de mise en oeuvre du procédé.

Dans le domaine de la perforation de bandes, et notamment lorsqu'une très grande précision est requise dans le positionnement des perforations, il est nécessaire d'avoir de tels mouvements de va-et-vient dans un plan. Ainsi la demande de brevet française intitulée "dispositif pour réaliser sur une bande, une opération selon un pas déterminé", déposée de même jour par la demanderesse, décrit un dispositif comprenant un bloc porte-poinçons décrivant de manière alternative, une courte portion d'arc de cercle autour d'un axe horizontal fixe parallèle à l'axe de défilement de la bande de façon à pouvoir faire coopérer périodiquement des poinçons avec une matrice portée par un bloc porte-matrice. Le bloc porte-poinçons est relié au bloc porte-matrice au niveau dudit axe horizontal fixe, les deux blocs ainsi fixés étant animés parallèlement à l'axe de défilement de la bande d'un mouvement de va-et-vient de période généralement identique à celle du mouvement du bloc porte-poinçons autour dudit axe fixe. Dans ces perforatrices, la période du mouvement de va-et-vient peut être de l'ordre de 37 ms pour une amplitude d'environ 20 mm.

Pour de tels dispositifs conjuguant à la fois vitesse et précision, il est nécessaire, notamment, que le mouvement horizontal de va-et-vient soit parfaitement parallèle au plan de la bande et qu'il s'effectue constamment dans un même plan.

Dans la technique antérieure, il est connu d'utiliser des mécanismes bielle-manivelle gui peuvent être du type à excentrique pour réaliser un tel mouvement de va-et-vient, le guidage du mouvement dans un même plan étant réalisé au moyen de mécanismes à glissières appropriés. Pour des mouvements de va-et-vient de fréquence très élevée, ces mécanismes présentent une usure assez rapide, générant dans le mouvement de guidage des imprécisions de plus en plus grandes. De plus, de tels mécanismes de guidage génèrent souvent des à-coups dans le mouvement de va-et-vient. De tels à-coups sont bien sûr préjudiciables à la précision de positionnement des perforations sur la bande.

Le document GB-A-684 933 décrit une structure déformable pour déplacer, selon un mouvement de va-et-vient, une surface disposée dans un premier plan et comprenant deux parallélogrammes déformables présentant chacun deux côtés parallèles au premier plan. Selon ce document, l'un des côtés parallèles est entraîné du fait de la flexibilité des lames ressort le reliant au second côté, ledit second côté étant entraîné d'un mouvement de va-et-vient, dans un plan parallèle au premier, au moyen d'un dispositif approprié.

Aussi est-ce un des objets de la présente invention que de fournir un procédé permettant d'animer d'un mouvement de va-et-vient dans un plan, une surface mobile, sans utiliser les mécanismes de guidage du type à glissières tels qu'utilisés dans la technique antérieure.

C'est encore un autre objet de la présente invention que de fournir un dispositif de mise en oeuvre d'un tel procédé.

D'autres objets de la présente invention apparaîtront au cours de la description plus détaillée qui va suivre.

Selon la présente invention, on réalise une structure déformable pour déplacer, selon un mouvement de va-et-vient d'amplitude A₂, une surface disposée dans un premier plan, comprenant, dans un plan orthogonal au premier, deux parallélogrammes déformables présentant chacun deux côtés parallèles au premier plan, l'un de ces côtés parallèles étant commun aux deux parallélogrammes et animé dans un second plan, sensiblement parallèle au premier, d'un mouvement de va-et-vient d'amplitude A₁, l'autre côté parallèle (14, 16) des deux dits parallélogrammes étant disposé dans un troisième plan, parallèle au premier, ledit autre côté parallèle (14) dudit premier parallélogramme est fixe, celui (16) du second parallélogramme est mobile et animé dans ledit troisième plan, au moyen d'un premier dispositif d'entraînement, d'un mouvement de va-et-vient d'amplitude A₂, ladite surface à déplacer étant supportée par ledit côté (16), ladite structure étant caractérisée en ce que le côté (15) est entraîné au moyen d'un second dispositif d'entraînement de manière à ce que le mouvement dudit côté (15) soit en phase avec le mouvement du côté (16), l'amplitude A₂ du mouvement du côté (16) étant égale à deux fois l'amplitude A₁ du mouvement du côté (15).

Selon la présente invention, on réalise également un procédé pour déplacer, selon un mouvement de va-et-vient d'amplitude A₂, une surface disposée dans un premier plan, comprenant les étapes suivantes :
a) on dispose dans un plan orthogonal audit premier plan, deux parallélogrammes déformables présentant chacun deux côtés parallèles au premier plan, l'un de ces côtés parallèles, mobile dans un second plan sensiblement parallèle au premier, étant commun aux deux parallélogrammes, l'autre côté parallèle des deux dits parallélogrammes étant disposé dans un troisième plan, parallèle au premier, ledit autre côté parallèle du premier parallélogramme est fixe, celui du second parallélogramme est mobile et supporte ladite surface à déplacer,
b) on applique audit autre côté parallèle dudit second parallélogramme un premier mouvement de va-et-vient dans ledit troisième plan d'amplitude A₂, au moyen d'un premier dispositif d'entraînement ;

ledit procédé étant caractérisé en ce que l'on applique audit côté parallèle commun, au moyen d'un second dispositif d'entraînement, un second mouvement de va-et-vient dans ledit second plan dont l'amplitude A₁ est égale à la moitié de l'amplitude A₂, ledit mouvement d'amplitude A₂ étant en phase avec le mouvement d'amplitude A₁.

L'invention sera décrite en détail en faisant référence aux planches de dessins annexés dans lesquels :
- la Fig. 1 représente de façon schématique un dispositif selon la présente invention,
- la Fig. 2 représente un mode de réalisation particulier du dispositif selon la présente invention,
- la Fig. 3 illustre une variante du mode de réalisation particulier représenté à la Fig. 2.

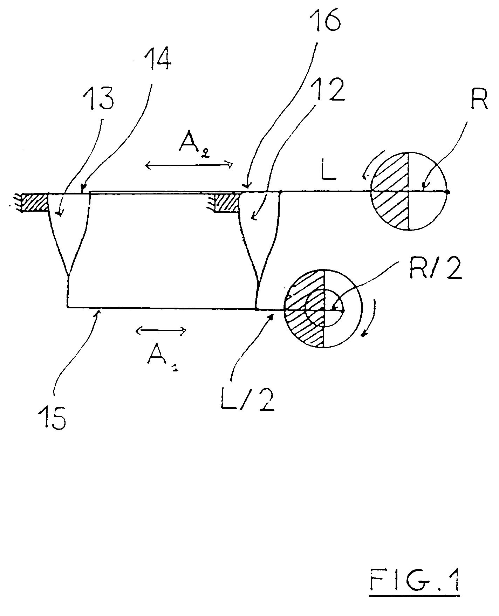

Le dispositif de la Fig. 1 comprend dans un plan orthogonal à un premier plan correspondant au plan du mouvement à réaliser, deux parallélogrammes déformables (12, 13) de hauteur identique présentant chacun deux côtés (14, 15 ; 15, 16) parallèles audit premier plan.

L'un de ces côtés parallèles (15) est commun aux deux parallélogrammes et est animé, dans un second plan parallèle audit premier plan d'un mouvement de va-et-vient dont l'amplitude A₁ est égale à la moitié de l'amplitude A₂ du mouvement à réaliser. L'autre côté parallèle (14, 16) de chacun des deux dits parallélogrammes est disposé dans un troisième plan. Ledit autre côté parallèle (14) du premier parallélogramme est fixe, celui (16) du second parallélogramme est mobile et animé dans ledit troisième plan d'un mouvement de va-et-vient d'amplitude A₂ en phase avec le mouvement d'amplitude A₁. Le côté mobile (16)
décrivant le mouvement d'amplitude A₂ est relié à un premier système de bielle-manivelle dont le rayon de la manivelle est R et dont la longueur de la bielle est L. Le côté mobile (15) commun aux deux parallélogrammes et décrivant un mouvement d'amplitude A₁ = A₂/2 est relié à un second système de bielle-manivelle dont le rayon de la manivelle est R/2 et dont la longueur de la bielle est L/2, les deux manivelles tournant à la même vitesse angulaire, soit en phase, soit en opposition de phase. Selon un mode de réalisation particulier, le rapport R/L est de préférence inférieur à 0,25. Les autres côtés des parallélogrammes sont réalisés en un matériau flexible approprié. Au moyen d'un tel dispositif, le mouvement souhaité, d'amplitude A₂ s'effectue toujours dans un même plan en raison des effets opposés résultant des mouvements appliqués à chacun des deux dits côtés parallèles. Selon un mode de réalisation préférentiel, les mécanismes bielle-manivelle sont des mécanismes à excentrique.

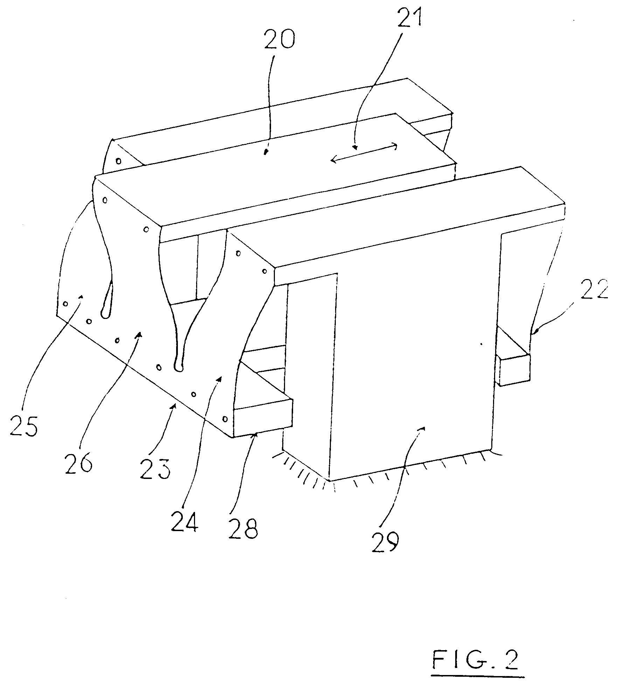

La Fig. 2 à laquelle on fait maintenant référence, illustre un mode de réalisation du dispositif selon la présente invention. Selon ce mode de réalisation on réalise un support plan (20) destiné à être animé d'un mouvement de va-et-vient d'amplitude A₂ dans la direction représentée par la flèche bidirectionnelle (21). Le dispositif représenté à la Fig. 2 fonctionne selon le même principe que celui évoqué en référence à la Fig. 1 mais est adapté pour supporter un dispositif tel qu'un dispositif de perforation (non représenté) et que l'on doit animer d'un mouvement de va-et-vient d'amplitude A₂ dans un plan parallèle au plan du support (20). Le dispositif selon la présente invention comprend deux éléments flexibles (22, 23) dont la hauteur libre, c'est-à-dire dont la hauteur efficace, est identique et disposés de part et d'autre du support (20). Chacun des éléments flexibles définit deux lames latérales (24, 25) et une lame centrale (26). Les matériaux constituant les deux éléments flexibles sont, de préférence, de nature sensiblement identique, les deux éléments étant également d'épaisseur sensiblement identique. Les extrémités inférieures desdites lames latérales et de ladite lame centrale du premier élément flexible (23) sont rendues solidaires de l'extrémité inférieure des lames latérales et de la lame centrale du second élément, respectivement, au moyen d'un élément de jonction (28). Selon le mode de réalisation représenté à la Fig. 2, l'élément de jonction (28) est sensiblement plan et disposé parallèlement au plan du support (20). Cet élément de jonction est disposé par rapport au chassis fixe (29) de manière à pouvoir être au moins partiellement libre en translation dans le sens du mouvement de va-et-vient à réaliser. Les lames latérales de chacun des éléments flexibles ont leur extrémité supérieure solidaire du chassis (29), tandis que la partie supérieure de la lame centrale de chacun des éléments est solidaire du support (20), les deux éléments flexibles ainsi disposés définissant, lorsqu'ils ne sont pas sollicités en translation, deux surfaces parallèles. Selon un mode de réalisation particulier, la largeur de la lame centrale (26) est égale à la somme des largeurs des lames latérales (24, 25). Par analogie avec le système décrit en référence à la Fig. 1, un tel dispositif définit deux parallélogrammes agencés de la même manière que dans le dispositif de la Fig. 1, les deux parallélogrammes portés par les lames latérales étant identiques et se comportant de manière identique. Le support (20) ainsi disposé est apte à se déplacer dans un plan selon un mouvement de va-et-vient d'amplitude A₂. A cet effet, la partie supérieure de la lame centrale d'un des éléments flexibles est couplée à un premier dispositif bielle-manivelle (non représenté) dont la manivelle décrit un rayon R et dont la bielle est de longueur L, la partie inférieure de ladite lame centrale étant, quant à elle, couplée à un second dispositif bielle-manivelle (non représenté) dont la manivelle décrit un rayon R/2 et dont la bielle est de longueur L/2, lesdites manivelles étant entraînées à la même vitesse angulaire, soit en phase, soit en opposition de phase. Dans certains cas, il est souhaitable d'équilibrer le mouvement réalisé. Pour cela, on utilise des contrepoids choisis convenablement et disposés de manière appropriée sur chacun des mécanismes bielle-manivelle (représentés par les deux demi-cercles hachurés en Fig. 1). De même pour des raisons d'équilibre du mouvement, il est préférable que les axes portant les contrepoids, à la différence de ce qui est représenté en Fig. 1, soient situés sensiblement l'un en dessous de l'autre, le côté parallèle commun aux deux parallélogrammes étant prolongé de manière appropriée.

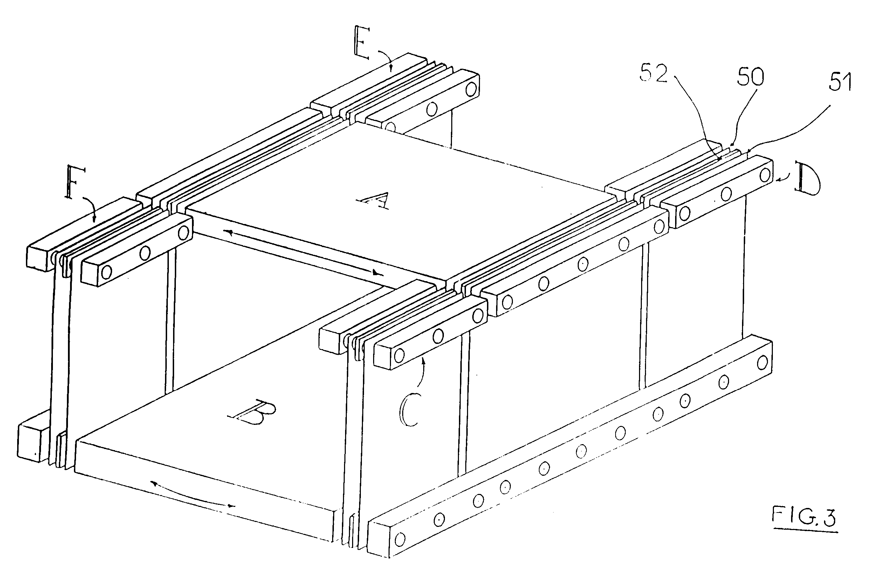

La Fig. 3 à laquelle il est maintenant fait référence illustre une variante du mode de réalisation discuté en référence à la Fig. 2. Selon le même principe que celui évoqué en référence aux Figs 1 et 2, les parties C, D, E et F sont fixes, tandis que l'élément de jonction B se déplace en phase avec le mouvement du support A, le déplacement de l'élément de jonction B ayant une amplitude égale à la moitié de celle du déplacement du support A. Des dispositifs d'entraînement du type bielle-manivelle tels que ceux utilisés dans le mode de réalisation de la Fig. 2 (non représentés) sont utilisés dans le présent mode de réalisation. Les lames flexibles simples 22, 23 du mode de réalisation de la Fig. 2 sont remplacées par 2 ou plusieurs lames fléxibles 50, 51 montées côte à côte et séparées par une cale 52 de telle sorte que deux lames montées côte à côte ne puissent venir en contact l'une avec l'autre. Les contraintes de torsion ainsi que les contraintes horizontales et verticales appliquées au support A sont ainsi supportées par plus d'une lame flexible. Ainsi pour une limite d'élasticité donnée de chaque lame ressort, l'épaisseur de chaque lame ressort peut être réduite puisque la contrainte est répartie sur une pluralité de lames ressort. Cette réduction d'épaisseur entraîne une diminution proportionnelle des contraintes de flexion pour un déplacement horizontal donné. Une telle disposition présente plusieurs avantages : le déplacement possible du support A sera nettement plus important pour un niveau de contrainte maximum donné du matériau flexible ; la force nécessaire pour déplacer le support A sera, pour un déplacement horizontal donné, nettement inférieure à celle requise dans le mode de réalisation de la Fig. 2 ; une rupture soudaine de l'une des lames n'aura pas les conséquences catastrophiques, pour un équipement disposé sur le support A, qu'entraînerait la rupture de l'une des lames du mode de réalisation de la Fig. 2 ; en effet selon le mode de réalisation de la Fig. 3, si l'une des lames vient à casser soudainement, le support A est toujours maintenu en position horizontale grâce à l'autre ou aux autres lames restantes.

## Revendications

1. Structure déformable pour déplacer, selon un mouvement de va-et-vient d'amplitude A₂, une surface disposée dans un premier plan, comprenant dans un plan orthogonal au premier deux parallélogrammes (12, 13) déformables présentant chacun deux côtés parallèles au premier plan (14, 15 ; 15, 16), l'un de ces côtés parallèles (15) étant commun aux deux parallélogrammes et animé dans un second plan sensiblement parallèle au premier, d'un mouvement de va-et-vient d'amplitude A₁, l'autre côté parallèle (14, 16) des deux dits parallélogrammes étant disposé dans un troisième plan, parallèle au premier, ledit autre côté parallèle (14) dudit premier parallélogramme est fixe, celui (16) du second parallélogramme est mobile et animé dans ledit troisième plan, au moyen d'un premier dispositif d'entraînement, d'un mouvement de va-et-vient d'amplitude A₂, ladite surface à déplacer étant supportée par ledit côté (16), ladite structure étant caractérisée en ce que le côté (15) est entraîné au moyen d'un second dispositif d'entraînement de manière à ce que le mouvement dudit côté (15) soit en phase avec le mouvement du côté (16), l'amplitude A₂ du mouvement du côté (16) étant égale à deux fois l'amplitude A₁ du mouvement du côté (15).

2. Structure déformable selon la revendication 1, caractérisée en ce que les deux autres côtés des deux parallélogrammes sont constitués d'un matériau flexible.

3. Structure déformable selon la revendication 2, caractérisée en ce que les deux autres côtés des deux parallélogrammes sont constitués d'au moins deux lames flexibles disposées côte à côte et séparées entre elles par une cale appropriée.

4. Structure déformable selon l'une quelconque des revendications 1 à 3, caractérisée en ce que ledit premier dispositif d'entraînement comprend un mécanisme bielle-manivelle dont la manivelle décrit un rayon R et dont la bielle est de longueur L, ledit second dispositif d'entraînement comprenant un mécanisme bielle-manivelle dont la manivelle décrit un rayon R/2 et dont la bielle est de longueur L/2, les deux manivelles étant entraînées en rotation, en phase ou en opposition de phase.

5. Structure déformable selon la revendication 4, dans laquelle le rapport R/L est inférieur à 0,25.

6. Structure déformable selon l'une quelconque des revendications 4 à 5, caractérisée en ce que lesdits premier et second mécanisme bielle-manivelle sont des mécanismes à excentrique.

7. Procédé pour déplacer selon un mouvement de va-et-vient d'amplitude A₂ une surface disposée dans un premier plan, comprenant les étapes suivantes :
a) on dispose dans un plan orthogonal audit premier plan, deux parallélogrammes déformables présentant chacun deux côtés parallèles audit premier plan, l'un de ces côtés, mobile dans un second plan sensiblement parallèle au premier, étant commun aux deux parallélogrammes, l'autre côté parallèle des deux dits parallélogrammes étant disposé dans un troisième plan parallèle au premier, ledit autre côté du premier parallélogramme étant fixe, celui du second étant mobile et supportant ladite surface à déplacer ;
b) on applique audit autre côté parallèle dudit second parallélogramme un premier mouvement de va-et-vient dans ledit troisième plan d'amplitude A₂ au moyen d'un premier dispositif d'entraînement ;
ledit procédé étant caractérisé en ce que l'on applique audit côté parallèle commun, au moyen d'un second dispositif d'entraînement un second mouvement de va-et-vient dans ledit second plan dont l'amplitude A₁ est égale à la moitié de l'amplitude A₂, ledit mouvement d'amplitude A₂ étant en phase avec le mouvement d'amplitude A₁.

8. Procédé selon la revendication 7, caractérisé en ce que ledit mouvement de va-et-vient d'amplitude A₂ est réalisé au moyen d'un premier mécanisme bielle-manivelle dont la manivelle décrit au rayon R et dont la bielle est de longueur L, le mouvement d'amplitude A₁ étant réalisé au moyen d'un second mécanisme bielle-manivelle dont la manivelle décrit un rayon R/2 et dont la bielle est de longueur L/2, les deux manivelles étant entraînées en rotation, en phase ou en opposition de phase.

## Patentansprüche

1. Verformbarer Körper zum Bewegen einer in einer ersten Ebene angeordneten Fläche gemäß einer einer Größe A₂ entsprechenden hin- und hergehenden Bewegung, mit einer zur ersten Ebene orthogonalen Ebene, zwei verformbaren Parallelogrammen (12, 13), von denen jedes zwei sich parallel zur ersten Ebene (14, 15; 15, 16) erstreckende Seiten aufweist, von denen die eine parallele Seite (15) den beiden Parallelogrammen gemeinsam und in einer zweiten Ebene parallel zur ersten Ebene mittels einer einer Größe A₁ entsprechenden hin- und hergehenden Bewegung angetrieben ist und die anderen parallelen Seiten (14, 16) der beiden Parallelogramme in einer dritten Ebene parallel zur ersten Ebene angeordnet sind, wobei eine der anderen parallelen Seiten (14) des ersten Parallelogramms ortsfest und die andere parallele Seite (16) des zweiten Parallelogramms bewegbar und in der dritten Ebene mittels einer ersten Antriebsvorrichtung gemäß einer der Größe A₂ entsprechenden hin- und hergehenden Bewegung angetrieben ist und die zu bewegende Fläche von der anderen parallelen Seite (16) gehalten ist, **dadurch gekennzeichnet, daß** die gemeinsame parallele Seite (15) mittels einer zweiten Antriebsvorrichtung angetrieben ist, so daß die Bewegung der gemeinsamen parallelen Seite (15) phasenstarr mit der Bewegung der anderen bewegbaren parallelen Seite (16) gekoppelt ist, und daß die der Größe A₂ entsprechende Bewegung der anderen bewegbaren parallelen Seite (16) dem doppelten Wert der der Größe A₁ entsprechenden Bewegung der gemeinsamen parallelen Seite (15) entspricht.

2. Verformbarer Körper nach Anspruch 1, dadurch gekennzeichnet, daß die beiden anderen Seiten der beiden Parallelogramme aus einem flexiblen Material bestehen.

3. Verformbarer Körper nach Anspruch 2, dadurch gekennzeichnet, daß die beiden anderen Seiten der beiden Parallelogrammme aus mindestens zwei flexiblen, nebeneinander angeordneten Platten bestehen, die mittels eines geeigneten Distanzstücks voneinander beabstandet sind.

4. Verformbarer Körper nach einem der Ansprüche 1 bis 3, dadurch gekennzeichnet, daß die erste Antriebsvorrichtung ein erstes Kurbelgetriebe aufweist, bei dem die Kurbel einen Radius R beschreibt und die Kurbelstange eine Länge L hat, daß die zweite Antriebsvorrichtung ein zweites Kurbelgetriebe umfaßt, bei dem die Kurbel einen Radius R/2 beschreibt und die Kurbelstange eine Länge L/2 hat, und daß die beiden Kurbeln in gleichphasiger oder gegenphasiger Drehrichtung angetrieben werden.

5. Verformbarer Körper nach Anspruch 4, dadurch gekennzeichnet, daß das R/L Verhältnis geringer ist als 0,25.

6. Verformbarer Körper nach Anspruch 4 oder 5, dadurch gekennzeichnet, daß das erste und zweite Kurbelgetriebe exzentrisch gelagert sind.

7. Verfahren zum Bewegen einer in einer ersten Ebene angeordneten Fläche gemäß einer einer Größe A₂ entsprechenden hin- und hergehenden Bewegung, wobei
a) in einer zur ersten Ebene orthogonalen Ebene zwei verformbare Parallelogramme angeordnet sind, von denen jedes zwei sich parallel zur ersten Ebene erstreckende Seiten aufweist, von denen die eine Seite beiden Parallelogrammen gemeinsam und in einer zweiten Ebene parallel zur ersten Ebene bewegbar angeordnet ist und die andere parallele Seite der beiden Parallelogramme in einer dritten Ebene parallel zur ersten Ebene angeordnet ist, wobei die andere Seite des ersten Parallelogramms ortsfest und die andere parallele Seite des zweiten Parallelogramms bewegbar ist und die zu bewegende Fläche hält, und
b) eine erste einer Größe A₂ entsprechende hin- und hergehende Bewegung mittels einer ersten Antriebsvorrichtung auf die andere parallele Seite in der dritten Ebene übertragen wird,
**dadurch gekennzeichnet, daß** eine zweite einer Größe A₁ entsprechende hin- und hergehende Bewegung mittels einer zweiten Antriebsvorrichtung auf die gemeinsame parallele Seite in der zweiten Ebene übertragen wird, wobei die der Größe A₁ entsprechende Bewegung der zweiten Antriebsvorrichtung dem halben Wert der der Größe A₂ entsprechenden Bewegung der ersten Antriebsvorrichtung entspricht, und daß die der Größe A₂ entsprechende Bewegung phasenstarr mit der der Größe A₁ entsprechenden Bewegung gekoppelt ist.

8. Verfahren nach Anspruch 7, dadurch gekennzeichnet, daß die der Größe A₂ entsprechende hin- und hergehende Bewegung mittels eines ersten Kurbelgetriebes übertragen wird, bei dem die Kurbel einen Radius R beschreibt und das Kurbelgetriebe eine Länge L hat, daß die der Größe A₁ entsprechende Bewegung mittels eines zweiten Kurbelgetriebes übertragen wird, bei dem die Kurbel einen Radius R/2 beschreibt und das Kurbelgetriebe eine Länge L/2 hat, und daß die beiden Kurbeln in gleichphasiger oder gegenphasiger Drehrichtung angetrieben werden.

## Claims

1. A distortable structure, for moving, according to a reciprocating movement of magnitude A₂, a surface arranged in a first plane, comprising, in a plane orthogonal to the first plane, two distortable parallelograms (12, 13), each one having two sides parallel to the first plane (14, 15; 15, 16), one of these parallel sides (15) being common to the two parallelograms and driven in a second plane parallel to the first one, by a reciprocating movement of magnitude A₁, the other parallel side (14, 16) of the two said parallelograms being arranged in a third plane, parallel to the first one, one of said other parallel side (14) of said first parallelogram is stationary, the other parallel side (16) of the second parallelogram is movable and driven in said third plane, by means of a first driving means, by a reciprocating movement of magnitude A₂, said surface to be moved being supported by said other parallel side (16), said structure being characterized in that said common parallel side (15) is driven by means of a second driving means so that the movement of said common parallel side (15) is in phase with the movement of said movable other parallel side (16), the magnitude A₂ of the movement of said movable other parallel side (16) being twice the magnitude A₁ of the movement of said common parallel side (15).

2. A distortable structure, according to claim 1, characterised in that the two other sides of the two parallelograms are comprised of a flexible material.

3. A distortable structure, according to claim 2, characterized in that said two other sides of the two parallelograms are comprised of at least two side by side flexible blades, spaced a part by means of an appropriate spacing means.

4. A distortable structure, according to any of claims 1 to 3, characterised in that said first driving means comprises a first crank-connecting rod mechanism in which the crank describes a radius R and the connecting rod length is L, said second driving means comprising a second crank-connecting rod mechanism in which the crank describes a radius R/2 and the connecting rod length is L/2, the two cranks being driven in rotation, in phase or in opposite phase.

5. A distortable structure, according to claim 4, in which the R/L ratio is less than 0.25.

6. A distortable structure, according to either claim 4 or 5, characterised in that said first and second crank-connecting rod mechanisms are eccentric.

7. A process for moving, according to a reciprocating movement of magnitude A₂, a surface arranged in a first plane, comprising the following stages :
a) two distortable parallelograms, are arranged in a plane orthogonal to said first plane, each of both parallelograms having two sides parallel to said first plane, one of said sides, arranged in a second plane parallel to the first one, being common to the two parallelograms and movable, the other parallel side of said two parallelograms being arranged in a third plane parallel to the first one, said other side of the first parallelogram being stationary, said other parallel side of the second being movable and supporting said surface to be moved,
b) a first reciprocating movement having a magnitude A₂ is applied, by first driving means, to said other parallel side in said third plane,
the process being characterized in that a second reciprocating movement having a magnitude A₁ is applied, by second driving means, to said common parallel side in said second plane, said magnitude A₁ of the movement of said second driving means being half the magnitude A₂ of the movement of said first driving means and, said movement of magnitude A₂ being in phase with the movement of magnitude A₁.

8. Process according to claim 7, characterised in that said reciprocating movement of magnitude A₂ is realised by means of a first crank-connecting rod mechanism, in which the crank describes a radius R and the connecting rod length is L, the movement of magnitude A₁ being realised by means of a second crank-connecting rod mechanism, in which the crank describes a radius R/2 and the connecting rod length is L/2, the two cranks being driven in rotation, in phase or in opposite
